# EUROPEAN PATENT SPECIFICATION

(11) **EP 4 083 730 B1**
(45) Date of publication and mention of the grant of the patent: **08.01.2025**
(21) Application number: 22166680.3
(22) Date of filing: 05.04.2022
(51) Int. Cl.: G05B 19/418

(54) **METHOD FOR PRODUCING ROLLS OF FILM MADE OF POLYMERIC MATERIAL FOR FOOD USE**
VERFAHREN ZUR HERSTELLUNG VON FOLIENROLLEN AUS POLYMEREM MATERIAL ZUR VERWENDUNG IN LEBENSMITTELN
PROCÉDÉ DE PRODUCTION DE ROULEAUX DE FILM EN MATÉRIAU POLYMÈRE À USAGE ALIMENTAIRE

(30) Priority: 28.04.2021 IT 202100010742
(43) Date of publication of application: 02.11.2022
(73) Proprietor: Suardi, Aldo Primo, 24044 Dalmine (BG) (IT)
(72) Inventor: Suardi, Aldo Primo, 24044 Dalmine (BG) (IT)
(74) Representative: Ottazzo, Marco Francesco Agostino

(56) References cited:
- WO-A1-2009/014818
- US-A1- 2019 240 889
- "A GUIDE TO POLYOLEFIN FILM EXTRUSION", 24 March 2012 (2012-03-24), Houston, TX, UsA, pages 1 - 44, XP055186310, Retrieved from the Internet <URL:http://web.archive.org/web/20120324014903/http://www.lyondellbasell.com/techlit/techlit/Handbooks%20and%20Manuals/Film%20Extrusion.pdf> [retrieved on 20150428]

## Description

The present invention generally relates to the production of rolls of film made of polymeric material and, in particular, a method for producing rolls of film made of polymeric material for food use.

In the packaging industry, in particular for packaging foodstuffs, the use of films made of polymeric material, such as for example polyvinyl chloride (PVC) or polyethylene (PE) is known. The production of the film starts from granules which, possibly added with further ingredients, are introduced into an extrusion equipment. The extrusion equipment has the purpose of homogenising and melting all components and possible additional ingredients.

The compound obtained is pushed through an extruder which provides a sheet or a continuous pipe made of semi-molten polymer. In order to confer the final appearance to the film, the sheet is laminated so as to narrow the thickness thereof, or compressed air is pushed into the extruded material to obtain a polymer bubble of the desired thickness.

Once extruded, the polymeric film is then subjected to a cooling step, so that it can be subsequently wound on reels of predefined dimensions, which are then packaged and prepared for storing, transportation and/or selling. Typically, in rolls of film made of polymeric material for food use, the respective film has a length that may range from a minimum of 20 metres to a maximum of 300 metres, with an average thickness comprised between about 5 microns and about 20 microns.

The current European regulations on the production of materials and articles that are intended to come into contact with food (regulation EC 2023/2006) provide for that these materials and articles be manufactured fully compliant with a *"good manufacturing practice"* (GMP). In detail, GMP is defined as: *"aspects of quality assurance which ensure that materials and articles are consistently produced and controlled to ensure conformity with the rules applicable to them and with the quality standards appropriate to their intended use by not endangering human health or causing an unacceptable change in the composition of the food or causing a deterioration in the organoleptic characteristics thereof'* (article 3 of regulation EC 2023/2006).

Therefore, the business operator shall establish, implement and ensure adherence to an *"effective"* and *"documented"* quality control system for the products thereof (article 5 of regulation EC 2023/2006). The quality control system *"shall include monitoring of the implementation and full* [that is not just partial] *compliance with the GMP and identify measures aimed at correcting any failure to comply with the GMP*" (article 6 of regulation EC 2023/2006). The business operator shall therefore *"establish and maintain appropriate documentation in paper or electronic format'* with respect to records covering the various manufacturing operations with the aim of ensuring compliance and safety of the finished materials or articles and with the aim of proving the results of the quality control system thereof (article 7 of regulation EC 2023/2006).

Current methods for producing rolls of film made of polymeric material for food use do not provide for that the polymeric material be constantly controlled in all processing steps thereof, that is from the initial step of cooling the extruded film to the final packaging step. In addition, in the current production methods, the reels of film are subjected to several operations by the operators during the various processing steps. For example, when moving from the extrusion equipment to the packaging one, each reel of film may undergo a more or less long storage step in the plant. Given that the polymeric material of which each reel is made is highly electrostatic, in this storage step the reel may attract any type of contaminants (for example insects, hair, organic residues, etc.). Contaminants may deposit both on the cylindrical surface of the reel and on the two juxtaposed sides of such reel, entering into the interstices between the layers of film and therefore ruining an entire batch of polymeric material to be packaged. Therefore, it is clear that the current methods for producing rolls of film made of polymeric material for food use do not allow full compliance with the GMP, but possibly only partial compliance with such regulation.

Document US 2019/240889 A1 discloses a method for producing rolls of film made of polymeric material wherein several data and parameters of the method are retrieved. However, these data and parameters are not used to make the rolls of film made of polymeric material compliant with the current regulations in the food industry. Document WO 2009/014818 A1 discloses a method for the inspection of rolls of film made of polymeric material during the respective manufacture. However, also in this case the data obtained from the inspection are not used to make the rolls of film made of polymeric material compliant with the current regulations in the food industry.

Therefore, an object of the present invention is to provide a method for producing rolls of film made of polymeric material for food use that can be carried out fully complying with the current regulations of the industry (regulation EC 2023/2006).

In detail, an object of the present invention is to provide a method for producing rolls of film made of polymeric material for food use that is capable ensuring a full and constant control, that is carried out continuously and uninterruptedly on the entire production cycle and, as a result, on the resulting products (rolls of film), fully complying with the current regulation of the industry (regulation EC 2023/2006).

Another object of the present invention is to provide a method for producing rolls of film made of polymeric material for food use that can be carried out with a single and fully operatively independent machine, that is in the absence of personnel designated to handle the articles manually.

These objects according to the present invention are achieved by providing a method for producing rolls of film made of polymeric material for food use as described in claim 1.

Further features of the invention are outlined by the dependent claims, which are an integral part of the present description.

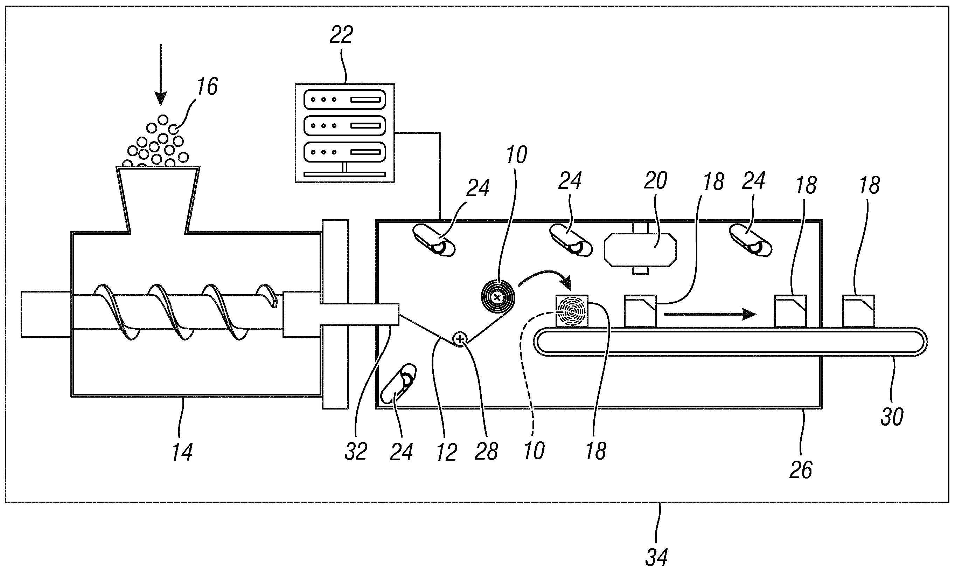

The features and advantages of a method for producing rolls of film made of polymeric material for food use according to the present invention will be more apparent from following exemplifying and non-limiting description, with reference to the attached schematic drawing (figure 1), which shows a plant for producing rolls of film made of polymeric material for food use capable of implementing the aforementioned method.

With reference to the figure, herein shown in an extremely schematic manner is an embodiment of a plant for producing rolls 10 of a film 12 made of polymeric material for food use. The plant sequentially comprises at least one extrusion equipment 14 which, in a per se known manner, makes the film 12 starting from one or more polymeric materials 16, for example consisting of granules.

The plant further comprises, downstream of the extrusion equipment 14, a single machine 26 inside which there is sequentially and continuously carried out the operations for cooling the extruded film 12, for example using one or more rollers for cooling 28, winding or reeling the film 12, so as to form a respective roll 10 of film 12, and packaging each roll 10 of film 12 in a respective sealed package 18. The packages 18 are then moved, for example by means of a conveyor device 30, to exit from the machine 26 and to be ready for the subsequent storage and/or transportation steps. Furthermore, the plant comprises at least one central processing unit 22 which monitors all the steps of producing the rolls 10 of film 12, same case applying to the subsequent packaging step.

The method for producing rolls 10 of film 12 made of polymeric material for food use according to the present invention therefore comprises a first step of making, through an extrusion process carried out on the extrusion equipment 14, the film 12 starting from the granules 16 made of polymeric material. Subsequently to the extrusion step, the film 12 is cooled until it reaches a predefined temperature suitable for the winding thereof. As a matter fact, the film 12 is ejected from the extrusion equipment 14 at a particularly high temperature, in the order of about 300°C.

Therefore, the cooled film 12 is subjected to a winding or reeling step, so as to sequentially obtain a plurality of rolls 10 containing an amount of film 12 with predefined length. Being a film 12 for food use, this predefined length of the film 12 is preferably comprised between about 20 metres and about 300 metres, even more preferably between about 50 metres and about 100 metres. The film 12 preferably has an average thickness comprised between about 5 microns and about 20 microns. Subsequently to the winding, each roll 10 of film 12 is packaged in a respective package 18 sealed and ready for storage, transportation and subsequent retail sale thereof.

In order to comply with the directives laid down by regulation EC 2023/2006, the method for producing rolls 10 of film 12 made of polymeric material for food use according to the present invention comprises a step of applying, on each roll 10 of film 12 and/or on each package 18 and by means of at least one marking device 20 connected to the central processing unit 22, of at least one unique identification code. Preferably, each unique identification code is applied on a respective package 18. Still preferably, each unique identification code may comprise both an alphanumeric code, which indicates the production batch of the respective roll 10 of film 12 and the date and time of production of such roll 10 of film 12.

The production cycle of each single roll 10 of film 12 and/or of each single package 18, which is carried out continuously, is constantly, continuously and uninterruptedly monitored by means of at least one video and/or fixed image acquisition device 24 connected to the central processing unit 22. This production cycle comprises at least the steps of cooling the extruded film 12, winding or reeling the film 12 and the packaging of each roll 10 of film 12. For example, each device 24 for uninterruptedly acquiring and/or storing videos and/or fixed images may consist of a video camera.

Therefore, the central processing unit 22 acquires videos and/or fixed images (for example photographs) coming from the acquisition devices 24. These videos and/or fixed images are stored in a predefined storage unit, which may be located both inside the central processing unit 22 and outside (for example on cloud storage spaces). The operations for acquiring and/or storing videos and/or fixed images are carried out uninterruptedly.

The central processing unit 22 also combines the unique identification code of each specific roll 10 of film 12 and/or of each package 18 with the video and/or with the fixed images of such specific roll 10 of film 12 and/or of each package 18. Therefore, this allows to generate a database containing these unique identification codes, so as to allow to carry out the connection with the videos and/or fixed images of the respective rolls 10 of film 12. In this manner, through the unique identification code of each specific roll 10 of film 12 and/or of each package 18, it is possible to subsequently verify the production cycle of such specific roll 10 of film 12 and/or of each package 18, for example to identify the cause of possible malfunctions.

All this fully complying with the regulation EC 2023/2006 (GMP), which expressly provides for the various operations for manufacturing items intended to come into contact with foodstuffs, like in the case of the film 12 and of the respective package 18, are constantly (that is, uninterruptedly) monitored and documented, as well as that these documents be stored on a paper medium or, like in the case of the method according to the present invention, in a more practical and effective electronic format. As a matter fact, for example in the case of possible defects and/or possible contaminations which can be detected subsequently on a determined roll 10 of film 12 and/or on the respective package 18, it is possible to track back to the respective manufacturing procedure through the production batch contained in the unique identification code. The video and/or photographs associated with such unique identification code, suitably stored in an archive, will then allow to identify the possible causes that led to the defects and/or to the contaminations.

As mentioned above, advantageously all the steps of extruding, cooling, winding and packaging each roll 10 of film 12 and/or each package 18 are carried out in a single machine 26. Conveniently, all the steps of extruding, cooling, winding and packaging each roll 10 of film 12 and/or each package 18 are carried out in a cleanroom 34, which encloses the single machine 26.

As known, a cleanroom is an environment whose main feature lies in the presence of ultra-pure air, that is with very low content of suspended dust microparticles. The operation of a cleanroom is based on the principle of forced recirculation of ultra-filtered air in a sealed room. The system which recirculates and filters the air consists of one or more fans operating at low speed, which introduce into the room a previously filtered laminar air flow through one or more HEPA (acronym for *"High Efficiency Particulate Air*"*)* filters positioned outside the room. The filtered air is therefore suctioned through grids usually arranged on the floor of the room.

Basically, all the steps of extruding, cooling, winding and packaging each roll 10 of film 12 and/or each package 18 are carried out in a controlled environment where the air is ultra-pure, that is with very low content of suspended dust microparticles. Therefore, for example, the extrusion head 32 of the extrusion equipment 14 may be directly inserted into the machine 26, and therefore into the cleanroom 34, so as to exclude any potential contamination right from the extrusion step and up to the step of discharging sealed packages 18, fully complying with the GMP. Therefore, this allows to ensure the production of rolls 10 of film 12 that are both contamination-free and provided with a full and uninterrupted documentation of the respective production process.

The average time for sequentially carrying out the steps of extruding, cooling, winding and packaging each roll 10 of film 12 and/or each package 18 may be comprised between about 10 seconds and about 2 minutes, without interrupting the production cycle. It should be observed that the lesser the production time, the more effective the control of the production cycle, given that it is easier to obtain continuous and uninterrupted videos of each roll 10 of film 12, fully complying with the GMP.

In addition, these steps of extruding, cooling, winding and packaging each roll 10 of film 12 and/or each package 18 may be carried out automatically, that is under the control of the central processing unit 22. In other words, the entire production process, from the extrusion step to the packaging step, is carried out in the absence of operators who could contaminate the rolls 10 of film 12 and/or the packages 18 should one of them be handled. Therefore, this once again ensures full compliance with the GMP.

Therefore, it has been observed that the method for producing rolls of film made of polymeric material for food use according to the present invention attains the objects outlined above. The method for producing rolls of film made of polymeric material for food use according to the present invention excludes, right from the initial production steps, the possibility that the film be polluted and/or contaminated, given that the steps of producing rolls of film made of polymeric material are carried out in a cleanroom, therefore in a controlled environment (obtaining an *"effective"* quality of the products according to article 5 of regulation EC 2023/2006). In addition, the method for producing rolls of film made of polymeric material for food use according to the present invention allows to subsequently control the entire process for producing such film, given that the production steps are appropriately documented (recorded and/or photographed) and available in electronic archives (obtaining a *"documented"* quality of products according to article 5 of regulation EC 2023/2006). The combination of the two features mentioned above allows full compliance with the European regulations in force in the industry, in particular consisting of regulation EC 2023/2006 (GMP).

The method for producing rolls of film made of polymeric material for food use thus conceived is in any case susceptible to various modifications and variants, all falling within the same inventive concept; furthermore, all details can be replaced by technically equivalent elements. Basically, the materials used as well as the shapes and dimensions may vary according to the technical needs.

Therefore, the scope of protection of the invention is defined by the attached claims.

## Claims

1. Method for producing rolls (10) of film made of polymeric material for food use, the method comprising the steps of:
- manufacturing, by means of an extrusion process carried out on at least one extrusion equipment (14), a film (12) starting from one or more polymeric materials (16);
- cooling said extruded film (12) until it reaches a predefined temperature suitable for the winding of said film (12);
- winding or reeling said film (12) to sequentially obtain a plurality of rolls (10) containing an amount of film (12) with predefined length;
- packaging each roll (10) of film (12) inside a respective sealed package (18);
- applying at least one unique identification code on each roll (10) of film (12) and/or on each package (18) by means of at least one marking device (20) connected to at least one central processing unit (22);
- constant, continuous and uninterrupted monitoring, by means of at least one video and/or fixed image acquisition device (24) connected to said central processing unit (22), of the production cycle of each single roll (10) of film (12) and/or of each single package (18), wherein said production cycle comprises at least said steps of cooling said extruded film (12), winding or reeling said film (12) and packaging each roll (10) of film (12); and
- acquiring, by means of said central processing unit (22), and storing, on a predefined storage unit, said videos and/or fixed images without interrupting acquisition and/or storage,
the method being **characterised in that** it comprises the further steps of:
- combining, by means of said central processing unit (22), the unique identification code of each specific roll (10) of film (12) and/or of each package (18) with the video and/or with the fixed images of said specific roll (10) of film (12) and/or of each package (18); and
- subsequently verifying the production cycle of said specific roll (10) of film (12) and/or of each package (18) through the unique identification code of each specific roll (10) of film (12) and/or of each package (18), so as to ensure the production of rolls (10) of film (12) and/or packages (18) which are provided with a complete and uninterrupted documentation of the respective production process,
- wherein said steps of extruding, cooling, winding and packaging of each roll (10) of film (12) and/or of each package (18) are carried out inside a single machine (26), so as to exclude any potential contamination of each roll (10) of film (12) and/or of each package (18) right from the extrusion step and up to the step of discharging of the sealed packages (18),
- wherein said steps of extruding, cooling, winding and packaging of each roll (10) of film (12) and/or of each package (18) are carried out inside a cleanroom (34), which encloses said single machine (26),
- wherein in said cleanroom (34) there is carried out a forced recirculation of filtered air, so as to ensure the production of rolls (10) of film (12) and/or packages (18) which are contamination-free, and
- wherein said steps of extruding, cooling, winding and packaging of each roll (10) of film (12) and/or each package (18) are carried out automatically under the control of said central processing unit (22), therefore do not require the presence of operators.

2. Method according to claim 1, wherein each unique identification code comprises both an alphanumeric code, which indicates the production batch of the respective roll (10) of film (12), and the date and time of production of said roll (10) of film (12).

3. Method according to claim 1 or 2, wherein each unique identification code is applied on a respective package (18).

4. Method according to any one of claims 1 to 3, wherein each video and/or fixed image acquisition device (24) consists of a video camera.

5. Method according to any one of claims 1 to 4, wherein the predefined length of the film (12) of each roll (10) is comprised between about 20 metres and about 300 metres, preferably between about 50 metres and about 100 metres.

6. Method according to any one of claims 1 to 5, wherein the film (12) of each roll (10) has an average thickness comprised between about 5 microns and about 20 microns.

7. Method according to any one of claims 1 to 6, wherein the average time for carrying out said steps of extruding, cooling, winding and packaging each roll (10) of film (12) and/or each package (18) is comprised between about 10 seconds and about 2 minutes.

## Patentansprüche

1. Verfahren zum Herstellen von Rollen (10) von Film, der aus polymerem Material gefertigt ist, zur Lebensmittelverwendung, das Verfahren umfassend die folgenden Schritte:
- Fertigen, mittels eines Extrusionsprozesses, der auf mindestens einer Extrusionsanlage (14) durchgeführt wird, eines Films (12) ausgehend von einem oder mehreren polymeren Materialien (16);
- Abkühlen des extrudierten Films (12), bis er eine vordefinierte Temperatur erreicht, die zum Aufwickeln des Films (12) geeignet ist;
- Aufwickeln oder Aufspulen des Films (12), um nacheinander eine Vielzahl von Rollen (10) zu erlangen, die eine Menge an Film (12) mit vordefinierter Länge enthalten;
- Verpacken jeder Rolle (10) von Film (12) in einer entsprechenden versiegelten Verpackung (18);
- Anbringen mindestens eines eindeutigen Identifizierungscodes auf jeder Rolle (10) von Film (12) und/oder auf jeder Verpackung (18) mittels mindestens einer Markierungsvorrichtung (20), die mit mindestens einer zentralen Verarbeitungseinheit (22) verbunden ist;
- ständiges, kontinuierliches und ununterbrochenes Überwachen, mittels mindestens einer Video- und/oder Standbilderfassungsvorrichtung (24), die mit der zentralen Verarbeitungseinheit (22) verbunden ist, des Produktionszyklus jeder einzelnen Rolle (10) von Film (12) und/oder jeder einzelnen Verpackung (18) wobei der Produktionszyklus mindestens die Schritte eines Abkühlens des extrudierten Films (12), Aufwickelns oder Aufrollens des Films (12) und Verpackens jeder Rolle (10) von Film (12) umfasst; und
- Erfassen, mittels der zentralen Verarbeitungseinheit (22) und Speichern, auf einer vordefinierten Speichereinheit ohne Unterbrechung der Erfassung und/oder Speicherung, der Videos und/oder Standbilder,
wobei das Verfahren **dadurch gekennzeichnet ist, dass** es die weiteren folgenden Schritte umfasst:
- Kombinieren, mittels der zentralen Verarbeitungseinheit (22), des eindeutigen Identifizierungscodes jeder spezifischen Rolle (10) von Film (12) und/oder jeder Verpackung (18) mit dem Video und/oder den Standbildern der spezifischen Rolle (10) von Film (12) und/oder jeder Verpackung (18); und
- anschließend Verifizieren des Produktionszyklus der spezifischen Rolle (10) von Film (12) und/oder jeder Verpackung (18) durch den eindeutigen Identifizierungscode jeder spezifischen Rolle (10) von Film (12) und/oder jeder Verpackung (18), um die Produktion von Rolle (10) von Film (12) und/oder Verpackungen (18) zu gewährleisten, die mit einer vollständigen und ununterbrochenen Dokumentation des jeweiligen Produktionsprozesses versehen sind,
- wobei die Schritte eines Extrudierens, Abkühlens, Aufwickelns und Verpackens jeder Rolle (10) von Film (12) und/oder jeder Verpackung (18) innerhalb einer einzigen Maschine (26) durchgeführt werden, um jede mögliche Kontamination jeder Rolle (10) von Film (12) und/oder jeder Verpackung (18) von dem Extrusionsschritt bis zu dem Entladeschritt der versiegelten Packungen (18) auszuschließen,
- wobei die Schritte eines Extrudierens, Abkühlens, Aufwickelns und Verpackens jeder Rolle (10) von Film (12) und/oder jeder Verpackung (18) innerhalb eines Reinraums (34) durchgeführt werden, der die einzelne Maschine (26) umschließt,
- wobei in diesem Reinraum (34) eine Zwangsumwälzung von gefilterter Luft erfolgt, um die Produktion von kontaminationsfreien Rollen (10) von Film (12) und/oder Verpackungen (18) zu gewährleisten, und
- wobei die Schritte eines Extrudierens, Abkühlens, Aufwickelns und Verpackens jeder Rolle (10) von Film (12) und/oder jeder Verpackung (18) automatisch unter der Steuerung der zentralen Verarbeitungseinheit (22) durchgeführt werden, weshalb die Anwesenheit von Bedienern nicht erforderlich ist.

2. Verfahren nach Anspruch 1, wobei jeder eindeutige Identifizierungscode sowohl einen alphanumerischen Code, der die Produktionscharge der jeweiligen Rolle (10) von Film (12) angibt, als auch das Datum und die Uhrzeit der Produktion der Rolle (10) von Film (12) umfasst.

3. Verfahren nach Anspruch 1 oder 2, wobei jeder eindeutige Identifizierungscode auf einer jeweiligen Verpackung (18) aufgebracht wird.

4. Verfahren nach einem der Ansprüche 1 bis 3, wobei jede Video- und/oder Standbilderfassungsvorrichtung (24) aus einer Videokamera besteht.

5. Verfahren nach einem der Ansprüche 1 bis 4, wobei die vordefinierte Länge des Films (12) jeder Rolle (10) zwischen etwa 20 Metern und etwa 300 Metern, vorzugsweise zwischen etwa 50 Metern und etwa 100 Metern, ist.

6. Verfahren nach einem der Ansprüche 1 bis 5, wobei der Film (12) jeder Rolle (10) eine durchschnittliche Stärke zwischen etwa 5 Mikrometer und etwa 20 Mikrometer aufweist.

7. Verfahren nach einem der Ansprüche 1 bis 6, wobei die durchschnittliche Zeit zum Durchführen der Schritte eines Extrudierens, Abkühlens, Aufwickelns und Verpackens jeder Rolle (10) von Film (12) und/oder jeder Verpackung (18) zwischen etwa 10 Sekunden und etwa 2 Minuten ist.

## Revendications

1. Procédé de production de rouleaux (10) de film à base de matériau polymère à usage alimentaire, le procédé comprenant les étapes suivantes :
- la fabrication, au moyen d'un processus d'extrusion effectué sur au moins un équipement d'extrusion (14), d'un film (12) à partir d'un ou de plusieurs matériaux polymères (16) ;
- le refroidissement dudit film extrudé (12) jusqu'à ce qu'il atteigne une température prédéfinie appropriée pour l'enroulement dudit film (12) ;
- l'enroulement ou le dévidage dudit film (12) afin d'obtenir en séquence une pluralité de rouleaux (10) contenant une quantité de film (12) ayant une longueur prédéfinie ;
- l'emballage de chaque rouleau (10) de film (12) à l'intérieur d'un emballage scellé respectif (18) ;
- l'application d'au moins un code d'identification unique sur chaque rouleau (10) de film (12) et/ou sur chaque emballage (18) au moyen d'au moins un dispositif de marquage (20) relié à au moins une unité centrale de traitement (22) ;
- la surveillance constante, continue et ininterrompue, au moyen d'au moins un dispositif d'acquisition d'images vidéo et/ou fixes (24) connecté à ladite unité centrale de traitement (22), du cycle de production de chaque rouleau (10) de film (12) et/ou de chaque emballage (18), dans lequel ledit cycle de production comprend au moins les étapes de refroidissement dudit film extrudé (12), d'enroulement dudit film (12) et d'emballage de chaque rouleau (10) de film (12) ; et
- l'acquisition, au moyen de ladite unité centrale (22), et le stockage, sur une unité de stockage prédéfinie, desdites images vidéos et/ou fixes sans interruption de l'acquisition et/ou du stockage,
le procédé étant **caractérisé en ce qu'**il comprend également les étapes suivantes :
- la combinaison, au moyen de ladite unité centrale de traitement (22), du code d'identification unique de chaque rouleau spécifique (10) de film (12) et/ou de chaque emballage (18) avec les images vidéos et/ou fixes dudit rouleau spécifique (10) de film (12) et/ou de chaque emballage (18) ; et
- la vérification ultérieure du cycle de production dudit rouleau spécifique (10) de film (12) et/ou de chaque emballage (18) au moyen du code d'identification unique de chaque rouleau spécifique (10) de film (12) et/ou de chaque emballage (18), afin de garantir la production de rouleaux (10) de film (12) et/ou d'emballages (18) avec une documentation complète et ininterrompue du processus de production respectif,
- dans lequel les étapes d'extrusion, de refroidissement, d'enroulement et d'emballage de chaque rouleau (10) de film (12) et/ou de chaque emballage (18) sont effectuées à l'intérieur d'une seule machine (26), de manière à exclure toute contamination potentielle de chaque rouleau (10) de film (12) et/ou de chaque emballage (18) à partir de l'étape d'extrusion et jusqu'à l'étape de déchargement des emballages scellés (18),
- dans lequel les étapes d'extrusion, de refroidissement, d'enroulement et d'emballage de chaque rouleau (10) de film (12) et/ou de chaque emballage (18) sont effectuées à l'intérieur d'une salle blanche (34), qui entoure ladite machine unique (26),
- dans lequel ladite salle blanche (34) est équipée d'une recirculation forcée d'air filtré, afin d'assurer la production de rouleaux (10) de film (12) et/ou d'emballages (18) exempts de toute contamination, et
- dans lequel les étapes d'extrusion, de refroidissement, d'enroulement et d'emballage de chaque rouleau (10) de film (12) et/ou de chaque emballage (18) sont effectuées de façon automatique sous le contrôle de ladite unité centrale de traitement (22), ce qui ne requiert de ce fait pas la présence des opérateurs.

2. Procédé selon la revendication 1, dans lequel chaque code d'identification unique comprend un code alphanumérique, qui indique le lot de production du rouleau respectif (10) de film (12), ainsi que la date et l'heure de production dudit rouleau (10) de film (12).

3. Procédé selon la revendication 1 ou 2, dans lequel chaque code d'identification unique est appliqué sur un emballage respectif (18).

4. Procédé selon l'une quelconque des revendications 1 à 3, dans lequel chaque dispositif d'acquisition d'images vidéos et/ou fixes (24) est constitué d'une caméra vidéo.

5. Procédé selon l'une quelconque des revendications 1 à 4, dans lequel la longueur prédéfinie du film (12) de chaque rouleau (10) est comprise entre environ 20 mètres et environ 300 mètres, de préférence entre 50 mètres et environ 100 mètres.

6. Procédé selon l'une quelconque des revendications 1 à 5, dans lequel le film (12) de chaque rouleau (10) a une épaisseur moyenne comprise entre environ 5 microns et environ 20 microns.

7. Procédé selon l'une quelconque des revendications 1 à 6, dans lequel la durée moyenne d'exécution desdites étapes d'extrusion, de refroidissement, d'enroulement et d'emballage de chaque rouleau (10) de film (12) et/ou de chaque emballage (18) est comprise entre environ 10 secondes et environ 2 minutes.
